# EUROPEAN PATENT APPLICATION

(11) **EP 1 191 455 A1**
(43) Date of publication of application: **27.03.2002**
(21) Application number: 00308387.0
(22) Date of filing: 25.09.2000
(51) Int. Cl.: G06F 13/38, G06F 13/24

(54) **Interrupt processor**

(71) Applicant: LUCENT TECHNOLOGIES INC., Murray Hill, New Jersey 07974-0636 (US)
(72) Inventor: Boecker, Ulrich, 58256 Ennepetal (DE); Kuttenkeuler, Ludger Josef, 90408 Nürnberg (DE); Nuetzel, Bertram Thomas, 91217 Hersbruck (DE)
(74) Representative: Watts, Christopher Malcolm Kelway, Dr.

(57) **Abstract**

A method and apparatus for processing an interrupt indication (INT) in data streams of time-interleaved signal sections containing address, data, and status information and belonging to each a logical channel. A processing block (B) is for sequentially processing these signal sections according to channel number or address and for generating INT source bits. The INT source bits are stored together with status information of each signal section in respective RAM cells under the respective channel number or address. The INT source bits from the RAM cells are continuously read into a loop for generating an interrupt request signal (IRQ).

## Description

### Interrupt Processor

The invention relates to a method and an apparatus for processing an interrupt indication in data streams having structurally similar time-interleaved signal sections.

Transmission channels of today's telecom networks carry a great number of logical signals. Multiplexing (time or wavelength division multiplexing) is used to arrange these logical signals within the transmission channel(s). For example, a 2.5 Gb/s STM-16 signal carries a maximum of 1008 identically structured 2 Mb/s VC-12 signals which themselves contain a PCM 30 data stream with 30 speech channels.

Each of these signals has to be controlled for performance, maintenance and surveillance purposes in the respective telecommunication applications. In doing so, a large amount of information of the same type has to be stored. Among this information is interrupt indication to initiate an interrupt request (IRQ). A current technique is to use a pipelined structure with one processing block for all signal sections or logical channels. The configuration and status information per logical channel is stored in flip-flops which are connected through a large bunch of multiplexers. This results in a bulky and complex structure, since not only a number of flip-flops according to the number of the logical channels is required, but also address device to address the correct flip-flop.

The problem to be solved by invention is to use a relative simple processing block for producing interrupt source bits, yet without the need for a bulky arrangement of flip-flops and address device.

The invention is defined in claims 1 and 3.

The invention includes a single processing block similar to the current technique as described above. Additionally, a random access memory (RAM) is provided to store the INT source bits under the number of the respective channel to which such bit belongs. Means for producing an interrupt request (IRQ) is provided to read the number of the INT source bits continuously in a loop and to create the IRQ signal.

In the case when there are mask bits, the RAM has a second section to store these mask bits. The means for producing the interrupt request IRQ are read simultaneously with the interrupt bits, and these interrupt bits may be suppressed for the interrupt request generation.

In an embodiment of the invention, the device includes a controller interface, and the RAM comprises additional ports for access from this controller interface and also for finishing interrupt service routine by deleting the interrupt bit from the RAM.

An embodiment of the invention will be described on the basis of the drawings.
- Fig. 1: is a schematic representation of the general structure, and
- Fig. 2: a detailed block diagram of the processing apparatus.

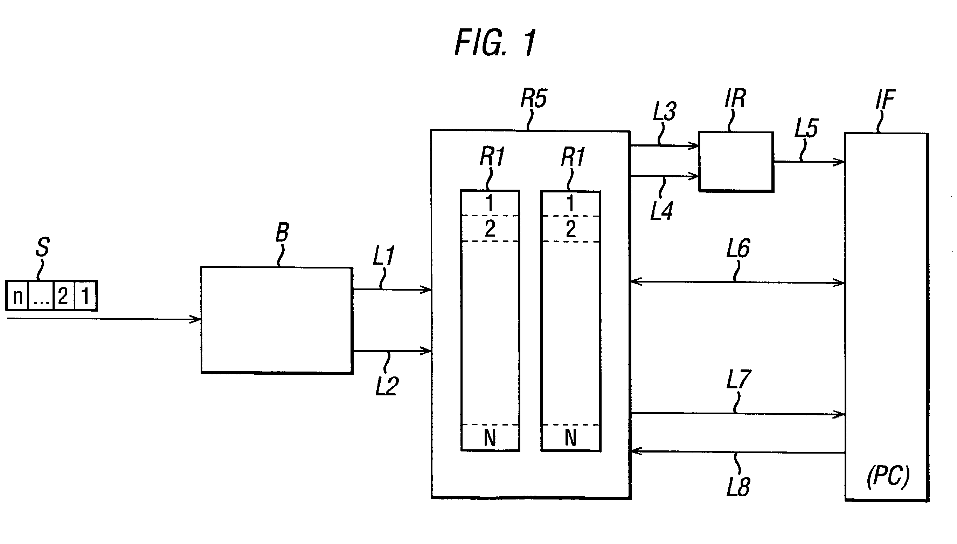

The general structure of interrupt processing is shown in Fig. 1. Time multiplexed signals S having sections 1, 2, ... n enter into a channel processing block B and are processed in regard to interrupt indication in the data stream of signal S. In the case of a 2.5 Gb/s STM-16 signal, 1008 signals 1, 2, ... n are contained in each signal S. For each logical signal every 1008th byte of S is checked, and the processing result is delivered via a line L1 for INT source info to a random access memory R1. The RAM R1 has N cells according to the number of the signal sections n. Channel processing block B has a second line L2 for inputting into RAM R1 the address of the channel, the processing block B is just working on.

In the example shown, a second RAM R2 is provided for storing INT mask bits simultaneously with the INT source bits (which are stored in RAM R1). RAMs R1 and R2 are embedded in a RAM shell RS which is an access circuit for the several RAM ports of the RAMs R1 and R2.

For initiating an interrupt request IRQ, the INT bits of RAM R1 are continuously read in a loop as indicated with an output line L3 and IRQ generation loop IR. If mask information is also used for the generation of the IRQ signal, a further line L4 is provided to circuit IR. The mask bits can be used to suppress the influence of the INT bits onto the IRQ generation.

An interface circuit IF is connected through line L5 with circuit IR and through further lines L6, L7, L8 with the RAM shell RS. Interface IF belongs to a computer for controlling allover functions of the apparatus. Line L6 is used for writing and reading the mask and is optional. Line L7 is used for reading the interrupt bits, and line L8 for clearing the interrupt bits at the end of a cycle.

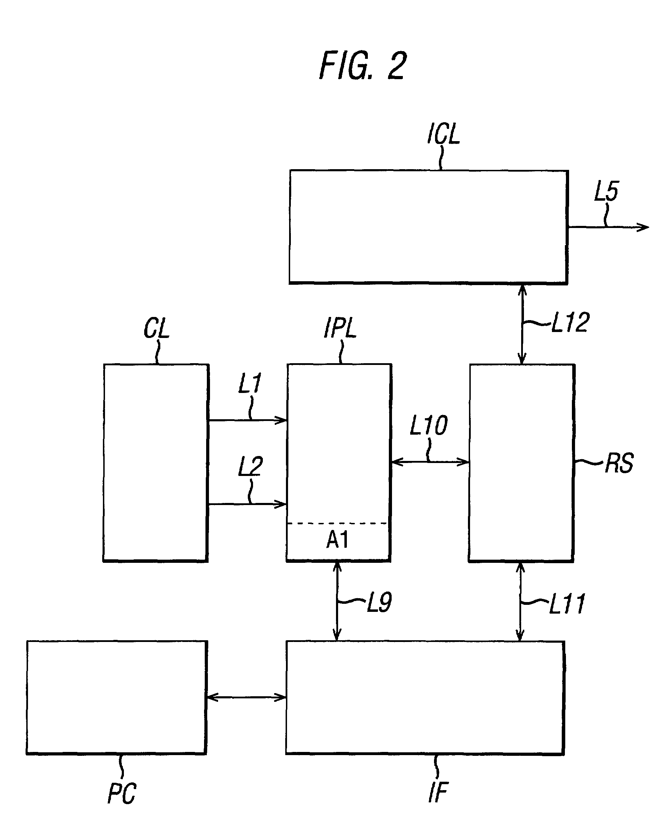

Fig. 2 shows a block diagram as a possible implementation of the general structure of Fig. 1. Channel processing block B is implemented by a core logic circuit CL and an interrupt processing logic circuit IPL. Interrupt processing logic IPL includes an arbitration interface AI which is connected through line L9 to the controller interface IF. The RAM shell RS which includes the RAM cells is connected to circuit IPL through line L10 for address and data which may include an interrupt flag for an addressed RAM cell. A further line L11 for address and data connects the RAM shell RS to the controller interface IF. RAM shell RS is also connected ICL through line L12 for address and data to IRQ generation loop IR which takes the form of an interrupt collect logic. Circuit ICL generates the IRQ signal for interrupt request.

The controller interface IF is used for communication with the microprocessor PC and controlled by software. When an interrupt request IRQ has been produced by the interrupt collect logic ICL, the microprocessor PC via controller interface reads out the interrupt status of every channel n of signal S by accessing the appropriate RAM cells. Furthermore, the microprocessor PC is adapted to produce channel mask bits which are specific to elected channels and are written into appropriate RAM cells to prevent interrupt evaluation for such elected channels. When the microprocessor has processed the interrupt request IRQ, the interrupt flag in the appropriate RAM cell will be cleared. This will be done by the microprocessor via the controller interface.

During an interrupt request cycle, the interrupt flag, mask and additional informations, for example confirmation information and status information, is stored for every channel in the appropriate cell of the RAM. There are several ports provided to each cell so that there is independent access to the stored information from several circuits.

The interrupt collect logic circuit ICL sequentially reads the interrupt flag and mask status from every cell in the RAM. If for a specific cell an interrupt flag is active, and the respective interrupt is not masked, the interrupt request line L5 will be activated. The microprocessor PC is activated for subsequent steps. Please note that evaluation takes place for a complete signal with all signal sections 1, 2, ... n. If no active interrupt flag is detected, the interrupt request line L5 will be cleared.

The interrupt processing logic circuit IPL takes the interrupt information from the incoming signal which is stored in the appropriate RAM cells dependent on the interrupt type and "saved value".

The arbitration circuit AI is for excluding write access form more than one circuit during the writing time of another circuit. Therefore, if the interrupt processing logic IPL and the controller interface IF access the same RAM cell during the same time, the arbitration circuit inhibits one of these circuits and thus prevents the loss of a new interrupt status and the information from the controller write access.

It can be seen from the foregoing description that interrupt processing in time-interleaved data structures is simplified to a large extent by using RAM devices for storing specific information which is carried in every logic channel of the signal. This makes it possible to follow the demand for increasing the available bandwidth capacity per system, i.e. provide more channels per device or system.

## Claims

1. A method for processing an interrupt indication (INT) in data streams of time-interleaved signal sections containing address, data, and status information, comprising the following steps:
a) admitting the signal sections to a processing block (B) for sequentially processing these signal sections according to channel number or address and for generating INT source bits;
b) storing the INT source bits together with status information of each signal section in respective RAM cells under the respective channel number or address;
c) reading the INT source bits from the RAM cells continuously into a loop for generating an interrupt request signal (IRQ).

2. The method of claim 1
wherein at the time of producing the INT source bits simultaneously INT mask bits are produced and stored in respective cells of a mask RAM under the respective channel number or address, and
wherein the INT mask bits are also used when producing the interrupt request (IRQ).

3. A circuit arrangement for processing an interrupt indication (INT) in data streams of signal sections containing address, data and status information, comprising:
a processing block (B) which forms INT source bits from information of subsequently delivered signal sections;
a random access memory for storing the INT source bits within cells addressable with the address number of the signal section to which the INT source bits belong;
an interrupt collect logic circuit (ICL) for evaluation of the INT source bits and generation of the interrupt request signal (IRQ).

4. The circuit arrangement according to claim 3
also containing a computer (PC) with controller interface (IF) for controlling the operation when generating the interrupt request (IRQ).

5. The circuit arrangement according to claim 4
wherein the random access memory includes a first RAM (R1) for INT source bits and a second RAM (R2) for INT mask bits, which RAMs are embedded in an access circuit (RS) so as to allow access from several devices to the interrupt and mask information stored in the RAMs (R1, R2).

6. The circuit arrangement according to any of claims 3-5
wherein the processing block (B) is adapted to continuously update the interrupt status in the random access memory.

7. The circuit arrangement according to any of claims 4-6
also comprising an arbitration interface (AI) adapted to prevent a write access at the same time to the same addressed RAM cell from different devices.

8. The circuit arrangement according to any of claims 4-7
wherein the processing block (B) is adapted to read the INT source bits and the INT mask bits for every signal section from respective RAM cells and activates the interrupt request signal (IRQ) when there is an active interrupt request, and appropriate mask bits are absent.

9. The circuit arrangement according to any of claims 4-8
wherein the controller interface (IF) is connected with the random access memory so as to read the interrupt status of each signal section by access to the respective RAM cell, when an interrupt request (IRQ) is present.

10. The circuit arrangement according to any of claims 4-9
wherein the controller interface (IF) is adapted to generate channel mask bits, each assigned to a respective signal section, so as to interrupt evaluation for several signal sections.

11. The circuit arrangement according to any of claims 4-10
wherein the controller interface (IF) is adapted to clear the interrupt indication in the RAM cell when the interrupt request has been serviced.
